(19) Europäisches Patentamt

European Patent Office

Office européen des brevets

(11) **EP 0 736 416 B1**

(12) **FASCICULE DE BREVET EUROPEEN**

(45) Date de publication et mention
de la délivrance du brevet:
**29.09.1999 Bulletin 1999/39**

(51) Int. Cl.⁶: **B60Q 3/04**

(21) Numéro de dépôt: 96400746.2

(22) Date de dépôt: **05.04.1996**

(54) **Tableau de bord incorporant un dispositif d'éclairage perfectionné et dispositif d'éclairage à cet effet**

Armaturenbrett für Kraftfahrzeuge mit Beleuchtungseinrichtung

Dashboard for automotive vehicle with lighting device

(84) Etats contractants désignés:
**DE ES FR GB IT**

(30) Priorité: **05.04.1995 FR 9504035**

(43) Date de publication de la demande:
**09.10.1996 Bulletin 1996/41**

(73) Titulaire:
**MAGNETI MARELLI FRANCE
92000 Nanterre (FR)**

(72) Inventeurs:
• **Bezard, Jean-Jacques
  78400 Chatou (FR)**
• **Bonutto, Alain
  95220 Herblay (FR)**
• **Wroblewski, Jérôme
  95400 Villiers-le-Bel (FR)**
• **Jury, Catherine
  92500 Rueil Malmaison (FR)**

(74) Mandataire: **Texier, Christian
  Cabinet Regimbeau,
  26, Avenue Kléber
  75116 Paris (FR)**

(56) Documents cités:
  EP-A- 0 498 451          FR-A- 2 583 558
  US-A- 4 380 043

**Description**

La présente invention concerne le domaine des dispositifs d'éclairage d'indicateurs.

La présente invention trouve notamment application dans la réalisation de tableaux de bord pour véhicules automobiles.

La présente invention a pour but principal de perfectionner les dispositifs d'éclairage d'indicateurs associés a des organes optiquement opaques, notamment des indicateurs à aiguille associés à un moyen optiquement opaque d'entraînement de l'aiguille, tel qu'un logomètre, un moteur pas à pas ou un moyen équivalent.

Ce but est atteint selon la présente invention grâce à un dispositif d'éclairage du type défini en revendication 1 qui est délimitée sous forme d'un préambule et d'une partié caracterisante par rapport au document EP-A-0 498 451.

Ce document EP-A-0498451 décrit un indicateur à aiguille comportant une source lumineuse disposée latéralement à côté du moteur d'entraînement de l'aiguille, et des moyens formés d'un barreau annulaire constituant un guide optique et un réflecteur disposés autour du moteur d'entraînement, pour renvoyer vers l'avant, en direction d'un cadran associé à l'aiguille, le flux lumineux reçu de la source lumineuse.

Selon une autre caractéristique avantageuse de la présente invention, le premier système optique comprend un réflecteur qui entoure au moins partiellement la source lumineuse et qui est formé d'une surface de révolution délimitée par une génératrice de type conique.

Selon une autre caractéristique avantageuse de la présente invention, le premier système optique comprend un réflecteur qui entoure au moins partiellement la source lumineuse et qui est formé d'une surface de révolution délimitée par une génératrice en ellipse de révolution autour d'un axe incliné par rapport au grand axe de l'ellipse.

Selon une autre caractéristique avantageuse de la présente invention le premier système optique comprend un réflecteur qui entoure au moins partiellement la source lumineuse et qui est formé d'une surface de révolution délimitée par une génératrice de type parabole.

Selon une autre caractéristique avantageuse de la présente invention, le premier système optique comprend un réflecteur qui entoure au moins partiellement la source lumineuse et qui est formé d'une surface de révolution délimitée par une génératrice de type conique dégénérée, adaptée pour définir un flux au moins sensiblement constant au niveau d'une couronne entourant ledit moyen optiquement opaque.

D'autres caractéristiques, buts et avantages de la présente invention apparaîtront à la lecture de la description détaillée qui va suivre, et en regard des dessins annexés donnés à titre d'exemples non limitatifs et sur lesquels :

- les figures 1 à 4 représentent des vues schématiques en coupe de quatre variantes de réalisation de dispositifs d'éclairage conformes à la présente invention,
- la figure 5 représente un schéma à l'appui d'un processus d'optimisation de la surface du réflecteur qui sera développé par la suite,
- les figures 6 et 7 représentent des vues en coupe de dispositifs d'éclairage conformes à deux variantes de réalisation de la présente invention,
- la figure 8 représente une vue en perspective schématique d'un réflecteur conforme à une variante de la présente invention,
- la figure 9 représente une vue en coupe schématique d'un dispositif conforme à une autre variante de réalisation de la présente invention, et
- la figure 10 représente une vue schématique face avant d'un second système optique conforme à une variante de réalisation de la présente invention.

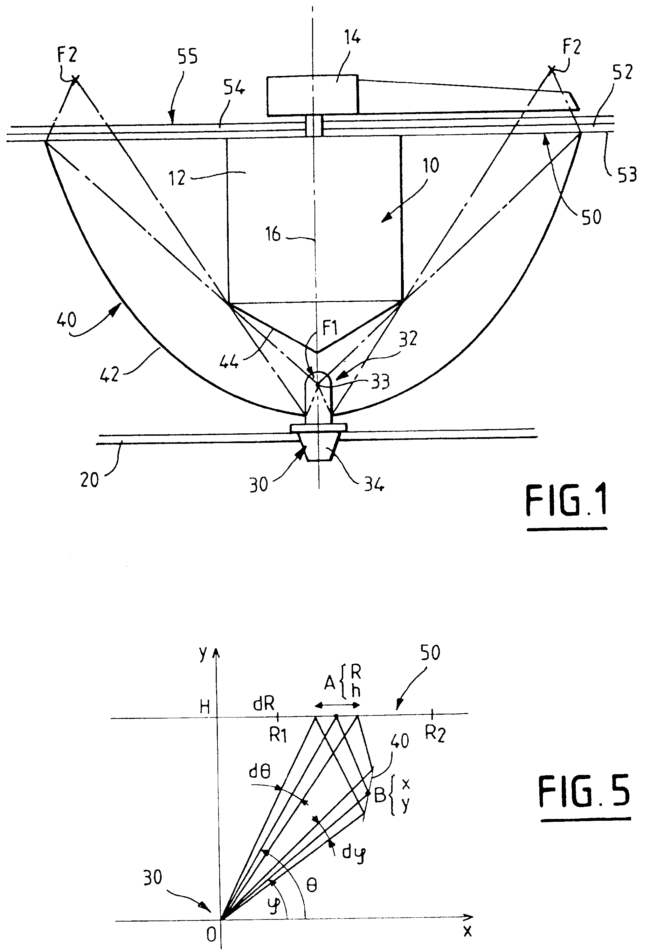

On a représenté sur les figures 1 à 4 annexées une partie de tableaux de bord de véhicule automobile, plus précisément un dispositif d'éclairage d'un indicateur associé à un moyen optiquement opaque 10, comprenant : un circuit imprimé 20 qui supporte une source lumineuse 30, un premier système optique 40 et un second système optique 50 qui récupère le flux lumineux renvoyé par le premier système optique 40.

Le moyen optiquement opaque 10 peut faire l'objet de nombreux modes de réalisation.

De préférence, il s'agit d'un moyen 12 d'entraînement à rotation d'une aiguille indicatrice 14, par exemple formé d'un logomètre, d'un moteur pas à pas ou de tous moyens équivalents. Le moyen 10 est centré sur un axe 16 qui coïncide avec l'axe de rotation de l'aiguille 14.

Le circuit imprimé 20 peut faire l'objet de nombreux modes de réalisation et ne sera donc pas décrit dans le détail par la suite. Ce circuit imprimé 20 disposé sur l'arrière du moyen 10 et transversalement à l'axe 16 de celui-ci, peut être conçu pour supporter différents accessoires additionnels outre la source lumineuse 30, par exemple des composants d'un circuit de traitement de signal, voire le moyen 10 ou les moyens formant le premier système optique 40 eux-mêmes.

La source lumineuse 30 peut également faire l'objet de nombreux modes de réalisation. Il s'agit de préférence d'une lampe à filament 32, ou d'une diode électroluminescente ou d'un groupe de lampes à filament ou de diodes, ou de tout moyen équivalent, placé dans une douille ou support 34 adapté pour être fixé sur le circuit imprimé 20. Le filament 33 de la lampe 32 (ou la source équivalente, notamment dans une diode) est situé sur l'avant du circuit imprimé 20, c'est-à-dire côté utilisateur.

Le premier système optique 40 est adapté pour renvoyer vers l'avant et autour dudit moyen optiquement opaque 10, le flux lumineux qu'il reçoit de la source lumineuse 30.

Selon les modes de réalisation représentés sur le figures 1 à 4, le premier système optique 40 comprend un réflecteur qui entoure au moins partiellement la source lumineuse 30.

Le réflecteur 40 est de préférence formé d'une surface de révolution autour de l'axe 16. Il peut s'agir d'une surface de révolution délimitée par une génératrice de type conique, dont un foyer coïncide au moins sensiblement avec la source lumineuse 30, telle qu'une génératrice du type ellipse comme représenté sur les figures 1 à 4 (qui renvoie les rayons issus d'un premier foyer F1 coïncidant avec la source 30 vers un second foyer F2), ou une parabole (qui renvoie parallèlement à l'axe optique du système, les rayons issus du foyer F1 coïncidant avec la source 30).

Comme on le voit sur les figures 1 à 4, l'axe de révolution 16 de la génératrice qui délimite le réflecteur 40 est incliné par rapport à l'axe principal de cette génératrice de sorte que le réflecteur 40 renvoie sensiblement selon une couronne entourant le moyen 10 et centrée sur l'axe 16, le flux lumineux qu'il reçoit de la source 30.

Ainsi, le réflecteur de l'invention permet de "contourner" le moyen optiquement opaque 10.

Plus précisément encore, comme représenté sur les figures 1 à 4, le réflecteur 40 comprend une calotte principale 42, à concavité dirigée vers l'avant du dispositif, soit vers l'aiguille 14.

Cependant de préférence, le moyen 10 est également pourvu sur sa face arrière dirigée vers la source 30, d'une calotte secondaire 44, à concavité dirigée vers l'arrière, soit vers la source 30, et répondant aux mêmes propriétés de géométrie optique que la calotte principale 42 (surface voisine d'une surface de révolution engendrée par la rotation d'un segment de conique autour d'un axe coplanaire). Cette calotte secondaire 44 permet ainsi de récupérer le flux lumineux dirigé par la source 30 vers la surface arrière du moyen optiquement opaque 10.

En variante comme représenté sur la figure 1, la calotte secondaire 44 prévue sur la face arrière du moyen 10 peut être formée d'un simple cône à génératrice rectiligne, qui renvoie vers la calotte principale 42, le flux lumineux issu de la source 30.

Selon un mode de réalisation préférentiel de l'invention, le réflecteur 40 n'est pas défini par une génératrice de type conique pur, mais par une génératrice de type conique approchée (c'est-à-dire par exemple intermédiaire entre une ellipse et une parabole) adaptée pour définir un flux au moins sensiblement constant sur la majorité de la surface du second système optique 50.

Une telle génératrice peut par exemple répondre à la définition suivante.

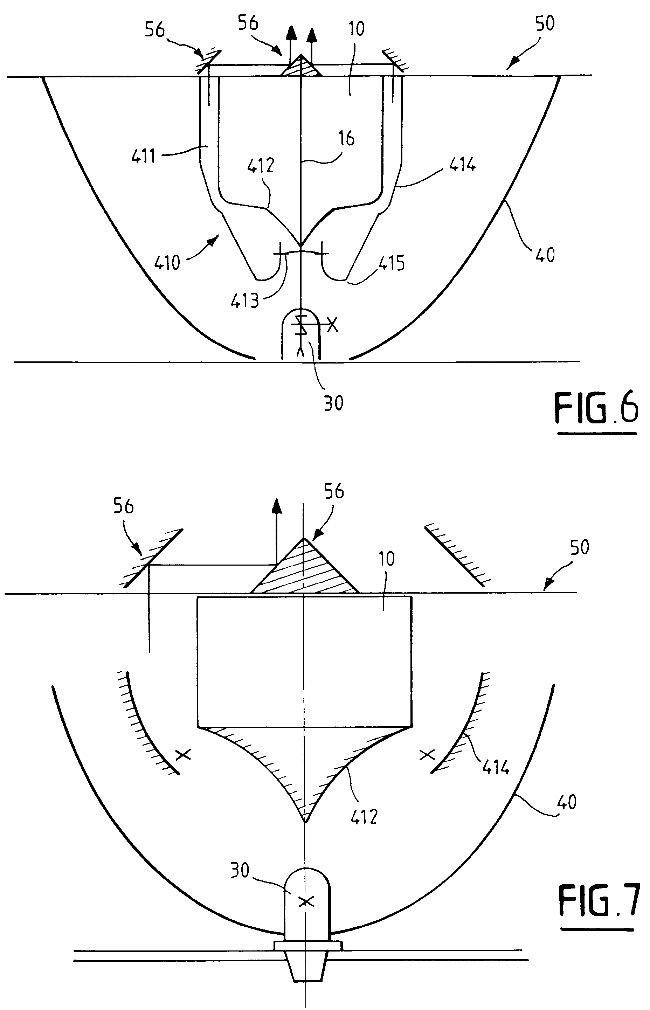

Soit en référence à la figure 5, une surface 50 en forme d'anneau, comprise entre des rayons R1 et R2, que l'on veut éclairer régulièrement (à flux constant) à partir d'une source 30 considérée comme un point lumineux O, centrée sur l'axe de l'anneau, et associée à un réflecteur 40 d'axe Oy.

En regard de la figure 5, on appelle :

B : un élément du miroir 40 d'axe Oy,

d$\varphi$ et d$\theta$ : les éléments de faisceau réfléchi par le réflecteur 40 et émis directement par la source 30 vers la surface 50,

$\psi$ : le flux par unité d'angle solide émis par la source 30 et fonction de l'angle,

x: un axe orthogonal à l'axe y du réflecteur 40

on peut écrire :

- inclinaison de la tangente en B à la courbe du réflecteur 40 :

$$(1/2) \; [ATG \, (y/x) + ATG \, [(h-y) / (R-x)]] \; \text{d'où} \; y' = -1/[tg[ATG(y/x) + ATG[(h-y)/(R-x)]]/2]$$

- relation entre d$\theta$ et d$\varphi$

$$\theta = ATG \, h/R$$

$$d\theta = dR[(-h/R^2)/(1+(h^2/R^2))]$$

Vu de 0 dR est vu son d$\varphi$ à la distance OB + AB avec un angle OAH d'où d$\varphi$ = dR sin BAH / (OB + BA) et

$$d\varphi = [dR \sin ATG \, [(h-y)/(R-x)]] / [(x^2+y^2)^{1/2} + [(R-x)^2+(h-y)^2]^2]$$

Le flux lumineux émis en OA est :

$$_{\psi \, ATG \, h/R} \, 2\pi \, \cos\theta \, d\theta$$

Le flux lumineux émis en OB est :

$$_{\psi \, ATG \, y/x} \, 2\pi \, \cos\varphi \, d\varphi$$

Le flux total reçu sur l'anneau dR par unité de surface est donc :

$$[_{\psi ATG \, h/R} \, 2\pi \, \cos\theta \, d\theta + \, _{\psi ATG \, y/x} \, 2\pi \, \cos\varphi \, d\varphi] \, / \, (2\pi \, R \, dR) \qquad (2)$$

relation qui peut être développée en h, R, x et y.

Si l'on reporte la relation (1) dans la relation (2), on obtient une relation entre x y y', équation différentielle de la courbe en section du miroir 40.

Cette relation peut être résolue point par point.

On peut pour cela partir du point de rayon $R_2$ ($R_2$, h), ce qui permet de calculer le y' en ce point, puis de prendre un point très proche de ($R_2$, h) sur la droite passant par ce point et de pente y' et de résoudre ainsi de proche en proche la courbe.

Il faut observer que la méthode ci-dessus ne prend en compte que le flux direct et le flux réfléchi par le miroir extérieur 40. On pourrait aussi prendre en compte les rayons émis dans l'angle solide ROH et récupérés par la calotte secondaire 44 si on définit à priori un miroir dans cette zone dont les rayons réfléchis viennent directement sur la zone $R_1$ $R_2$ sans passer par le miroir extérieur 40.

La méthode de calcul précitée peut également être adaptée dans le cas ou l'on utilise un réflecteur secondaire 44 qui réfléchit vers le réflecteur principal 42 le flux qu'il reçoit de la source 30.

Le réflecteur 40 peut être formé par métallisation de la paroi d'une cavité de révolution formée dans une pièce, par emboutissage d'une pièce réflectrice, par exemple en métal, ou encore par réflexion totale sur la paroi d'une cavité de révolution ménagée dans une pièce optique, par exemple en matière plastique ou équivalent, ou par tout moyen équivalent, par exemple par moulage d'une matière plastique de couleur blanche ou encore par apport d'une peinture réfléchissante, telle qu'une peinture blanche, brillante ou mâte .

Le cas échéant, cette cavité formant le réflecteur 40 de révolution peut être obtenue en réalisant l'élément correspondant sous forme de plusieurs coquilles complémentaires par exemple des coquilles délimitant respectivement la calotte principale 42 et la calotte secondaire 44.

Le second système optique 50 est adapté pour récupérer le flux lumineux renvoyé par le premier système optique 40 au moins au niveau d'un secteur de couronne entourant le moyen optiquement opaque 10.

Le système 50 est de préférence formé dans un élément 52 situé en avant de l'élément opaque 10 précité, c'est-à-dire côté utilisateur. L'élément 52 est formé avantageusement d'un conduit de lumière, c'est-à-dire un panneau de matériau optiquement transparent, par exemple en matière plastique ou équivalent, plan et d'épaisseur constante.

Le système optique 50 peut faire l'objet de plusieurs modes de réalisation.

Le système optique 50 peut comprendre par exemple comme représenté sur la figure 1, un cadran 54 rapporté sur l'élément 52 ou imprimé directement sur la face avant de cet élément 52 et comportant des plages transparentes ou translucides coïncidant avec la couronne de flux lumineux entourant l'élément 10, renvoyée par le réflecteur 40. Il peut s'agir par exemple de plages définissant une échelle de valeurs centrées sur l'axe 16, et associées à l'aiguille indicatrice 14 entraînée à rotation.

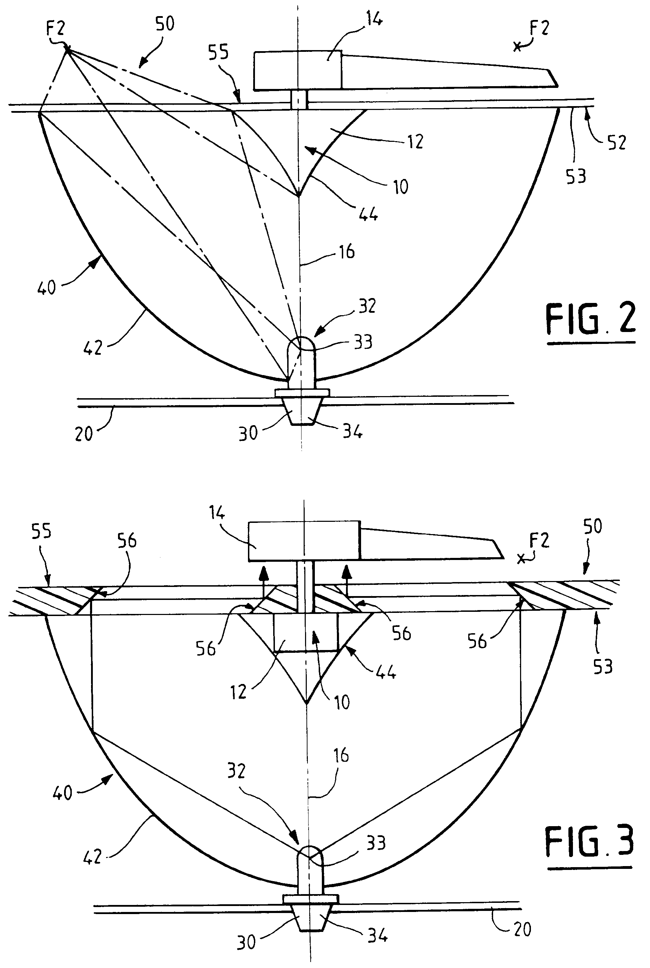

Le système optique 50 peut également être formé par exemple, comme représenté sur la figure 3, de prismes de renvoi 56 réalisés dans l'élément 52, et conçus pour récupérer au moins une partie du flux renvoyé par le réflecteur 40 et rediriger celui-ci vers un site d'utilisation, par exemple vers le moyeu de l'aiguille indicatrice 14.

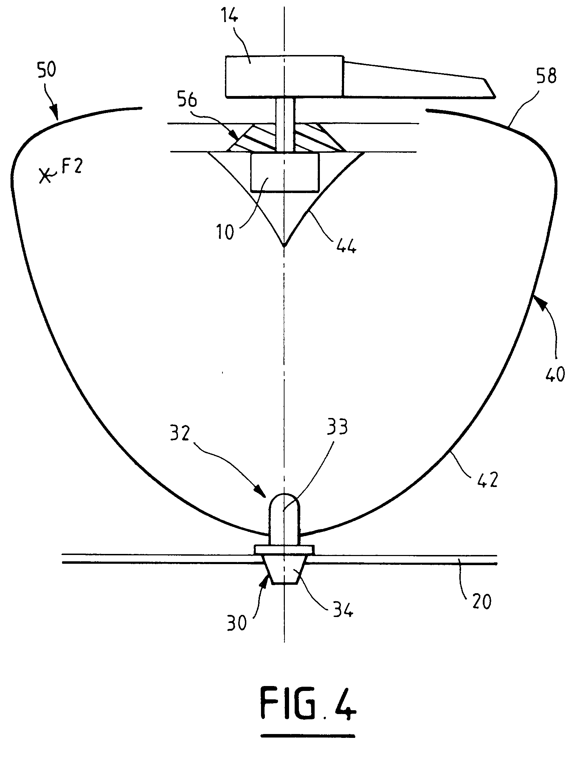

Comme représenté sur la figure 4, le système optique 50 peut également être formé d'un second réflecteur de révolution 58 autour de l'axe 16 délimité par une génératrice de type ellipse à concavité dirigée vers l'arrière, dont un foyer coïncide avec une zone de concentration du flux issu du réflecteur 40 (par exemple le second foyer F2 d'un réflecteur 40 en ellipse) et le second foyer coïncide avec un site d'utilisation, par exemple le moyeu de l'aiguille indicatrice 14 entraînée à rotation.

La présente invention peut également être utilisée pour définir un fond coloré au tableau de bord.

En outre, les moyens 50 peuvent être formés par une combinaison des moyens précités, c'est-à-dire que sur un secteur donné autour de l'axe 16, les moyens 50 peuvent être formés d'un cadran 54, sur un autre secteur les moyens 50 peuvent être formés de prismes 56 comme illustré sur la figure 3 et enfin les moyens 50 peuvent être formés d'un réflecteur en ellipse sur un autre secteur. En d'autres termes, les figures 2, 3 et 4 peuvent correspondre à des vues en coupe axiale selon des plans non coplanaires, d'un même dispositif.

La géométrie du système optique 50 doit tenir compte de l'incidence des rayons renvoyés par le réflecteur 40, du fait que généralement la source optique n'est pas ponctuelle (notamment dans le cas d'un filament) et que les rayons renvoyés par le réflecteur 40 sont déviés lors du passage du dioptre formé à l'interface de la paroi arrière 53 de l'élément 52, c'est-à-dire le dioptre formé par le milieu (généralement de l'air) dans le volume interne du réflecteur 40 et le matériau composant l'élément 52 (généralement un plastique transparent).

Les moyens 50 peuvent être formés, de façon comparable au réflecteur 40, par métallisation de la surface d'une cavité, emboutissage d'une pièce réflectrice, ou encore par réflection totale sur la paroi, ou tout moyen équivalent.

Les rayons récupérés par les moyens 50 peuvent encore être renvoyés vers la face avant 55 du conduit 52 par un moyen diffuseur prévu sur la face arrière 53 de cet élément 52, par exemple un revêtement de peinture blanche déposé sur la face arrière 53 du conduit 52, pour rediffuser la lumière provenant des moyens 50 vers la face avant 55, en direction par exemple d'un cadran imprimé déposé contre cette face avant 55.

Les plages colorées, ou témoins d'alerte précités, peuvent être formés dans un cadran (réalisé à base d'une feuille de matière plastique) rapporté de façon classique sur la face avant du conduit 52. Cependant, de préférence, selon l'invention ces plages colorées et témoins d'alerte sont formés par impression directe sur la face avant 55 du conduit 52.

On va maintenant décrire la variante de réalisation représentée sur la figure 6.

On retrouve sur la figure 6 un organe opaque 10, une source lumineuse 30, un réflecteur 40 formant premier système optique conforme aux enseignements précités et un second système optique 50.

En outre selon la figure 6, le premier système optique 40 comprend des moyens additionnels 410 adaptés pour récupérer le flux lumineux émis par la source 30 vers la surface arrière de l'organe opaque 10 et diriger ce flux vers les moyens 50, avec une incidence parallèle à l'axe optique 16, de préférence pour éclairer un moyeu d'aiguille 14.

Selon la figure 6, les moyens additionnels 410 sont formés dans une pièce 411 en matériau optiquement transparent, par exemple en verre ou en matière plastique. La pièce 411 est de préférence de révolution autour de l'axe 16. Elle travaille par réfraction ou par réflexion lorsque l'incidence dépasse l'angle de réfraction limite.

De préférence les moyens additionnels 410 définissent une première surface réflectrice 412 disposée en regard de la surface arrière de l'organe opaque 10 pour récupérer le flux émis dans cette direction par la source 30 et une seconde surface réflectrice 414 qui entoure la première surface 412 et qui est adaptée pour diriger le flux qu'elle reçoit de la surface 412, vers l'avant, soit vers le second système optique 50, avec une incidence parallèle à l'axe optique 16.

Plus précisément encore, selon la figure 6, les moyens additionnels 410 comprennent :

- une première surface réflectrice 412 disposée en regard de la surface arrière de l'organe opaque 10 pour récupérer le flux émis dans cette direction par la source 30, ladite première surface 412 étant formée sur la face avant de la pièce 411 et étant une surface de révolution autour de l'axe 16, délimitée par une génératrice en portion d'ellipse dont un premier foyer coïncide avec le centre de la source lumineuse 30; la première surface 412 est ainsi concave en direction de la source 30; elle définit par ailleurs un second foyer annulaire constitué d'un cercle centré sur l'axe 16; la première surface 412 travaille par réflexion totale,

- une surface d'entrée 413 formée sur la face arrière de la pièce 411, dirigée vers la source 30 et délimitée de préférence par une calotte sphérique concave centrée sur la source 30, de sorte que la surface 413 ne dévie pas les rayons qui la traversent; la surface d'entrée 413 possède de préférence la même ouverture angulaire, vue de la source 30, que ladite première surface réflectrice 412; la surface 413 travaille par réfraction,

- une seconde surface réflectrice 414 formée sur la surface extérieure de la pièce 411, qui entoure la première surface 412 et qui est adaptée pour diriger le flux qu'elle reçoit de la surface 412, vers l'avant, soit vers le second système optique 50, avec une incidence parallèle à l'axe optique 16; la seconde surface réflectrice 414 est formée d'une surface de révolution autour de l'axe 16, délimitée par une génératrice en portion de parabole dont le foyer coïncide avec le second foyer annulaire de la première surface réflectrice 412 et dont le grand axe s'étend parallèlement à l'axe 16; la seconde surface 414 travaille par réflexion totale,

- une seconde surface d'entrée 415, formée sur la face arrière de la pièce 411, de révolution autour de l'axe 16, qui relie la périphérie extérieure de la surface centrale 413 et la périphérie intérieure de la surface réflectrice 414, et qui est adaptée pour focaliser les rayons qui la traversent en provenance de la source 30 sur le second foyer annulaire de la surface parabolique 414; cette seconde surface 415 travaille par réfraction.

On va maintenant décrire la variante de réalisation représentée sur la figure 7.

On retrouve sur la figure 7, de façon comparable à la figure 6, un organe opaque 10, une source lumineuse 30, un premier système optique 40 comprenant un réflecteur 40 conforme aux enseignements précités ainsi que des moyens additionnels 410 adaptés pour récupérer le flux lumineux émis par la source 30 vers la surface arrière de l'organe opaque 10 et diriger ce flux vers les moyens 50, avec une incidence parallèle à l'axe optique 16, de préférence pour éclairer un moyeu d'aiguille 14, et un second système optique 50.

Selon la figure 7, les moyens additionnels 410 sont formés non point dans une pièce en matériau optiquement transparent comme celà était le cas pour la figure 6, mais grâce à des éléments réflecteurs, par exemple des éléments métallisés. Les moyens additionnels 410 sont de préférence de révolution autour de l'axe 16

Les moyens additionnels 410 de la figure 7 définissent comme sur la figure 6 une première surface réflectrice 412 disposée en regard de la surface arrière de l'organe opaque 10 pour récupérer le flux émis dans cette direction par la source 30 et une seconde surface réflectrice 414 qui entoure la première surface 412 et qui est adaptée pour diriger le flux qu'elle reçoit de la surface 412, vers l'avant, soit vers le second système optique 50, avec une incidence parallèle à l'axe optique 16.

Plus précisément encore, selon la figure 7, la première surface réflectrice 412 est une surface de révolution autour de l'axe 16, concave vers la source 30 délimitée par une portion d'ellipse dont un premier foyer coïncide au moins sensiblement avec la source 30 et qui délimite par conséquent un second foyer annulaire centré autour de l'axe 16.

La seconde surface réflectrice 414 est une surface de révolution autour de l'axe 16, délimitée par une portion de parabole dont le foyer coïncide avec le second foyer de la première surface 412 et dont le grand axe s'étend parallèlement à l'axe 16.

Le cas échéant dans le cadre des modes de réalisation des figures 6 et 7, le réflecteur 42 peut être omis, le premier système optique 40 étant alors composé uniquement desdits moyens additionnels 410, conçus de préférence pour éclairer le moyeu d'une aiguille. Par ailleurs les moyens additionnels sont de préférence associés à une pièce optique 52 comprenant un double prime conique 56 concentrique à l'axe 16, comparable à la figure 3, pour décaler le faisceau parallèlement à l'axe 16, et injecter par exemple celui-ci dans un moyeu d'aiguille.

Bien entendu la présente invention n'est pas limitée au mode de réalisation particulier qui vient d'être décrit mais s'étend à toute variante conforme à son esprit.

Par ailleurs, la présente invention s'étend également aux tableaux de bord incorporant un tel dispositif d'éclairage d'indicateurs.

L'homme de l'art comprendra aisément que la structure du dispositif d'éclairage conforme à la présente invention permet de récupérer quasi-intégralement le flux lumineux émis par la source d'éclairage 30, en particulier pour l'éclairage d'une échelle de mesure disposée en anneau et d'une aiguille.

Certains au moins des réflecteurs 40 prévus sur le tableau de bord peuvent être formés non pas de pièces de révolution sur 360°, mais de pièces couvrant un angle limité, inférieur à 360°, autour de l'axe 16.

Bien entendu, le système optique 50 doit être adapté en conséquence. Le cas échéant, ces moyens 50 peuvent être formés d'un simple plan ou d'une calotte incurvée en bordure de la pièce 52, en regard du réflecteur 40.

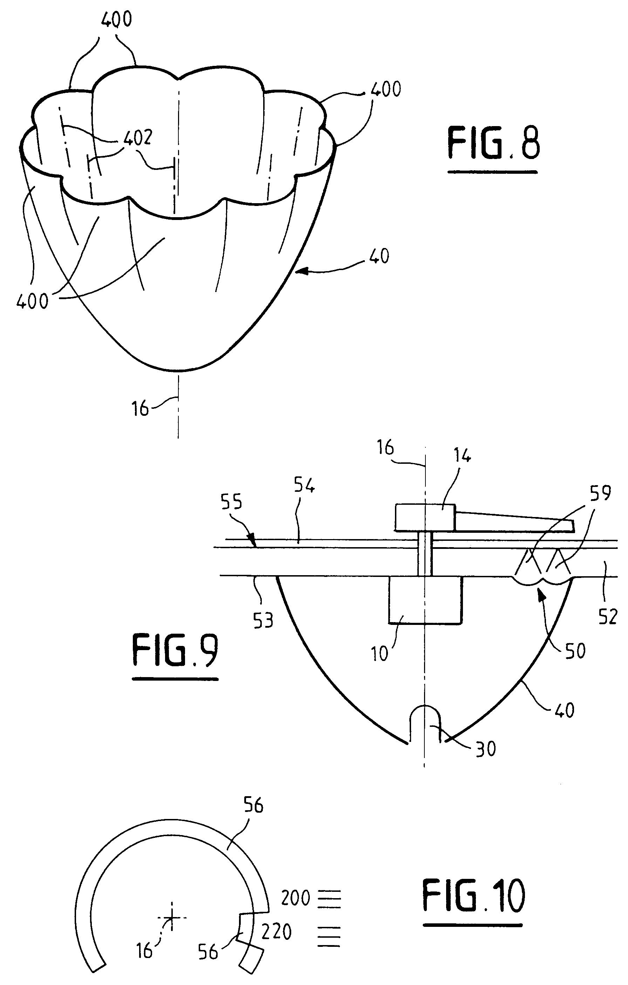

Selon encore une autre variante, comme représenté schématiquement sur la figure 8, le réflecteur 40 formant le premier système optique peut être formé non point d'une pièce de révolution autour de l'axe 16, mais d'une succession de calottes 400 réparties autour de l'axe 16. Chaque calotte 400 est définie de préférence par une génératrice du type conique, par exemple ellipse ou parabole, voire conique dégénérée adaptée pour définir un flux constant, partiellement de révolution autour d'un axe respectif 402 incliné par rapport à l'axe optique 16 du système. Les différents axes 402 peuvent s'appuyer sur un cône de révolution autour de l'axe 16 central ou sur une courbe qui n'est pas de révolution autour de cet axe 16. Chaque axe 402 peut être centré globalement par exemple sur un caractère d'une plage d'indications portées par le cadran 54 (par exemple des symboles "10", "20", "30"... d'une plage de vitesse). Cette disposition permet de focaliser au mieux le flux récupéré sur les plages utiles à éclairer.

Selon une autre caractéristique avantageuse de la présente invention, il est prévu un écran thermique entre la source lumineuse 30 et les cadrans ou impressions associées à la pièce 52. Un tel écran thermique peut être formé par exemple d'une peinture sélective, réfléchissant les infra-rouges mais transparente aux rayonnements visibles, déposée sur la face arrière 53 du conduit 52. En variante on peut envisager de réaliser le réflecteur 40 en matériau dichroïque ou revêtu d'un matériau dichroïque, adapté pour réfléchir le rayonnement du domaine visible, tout en étant transparent au domaine infrarouge.

Selon une autre caractéristique avantageuse de la présente invention, l'un au moins du réflecteur 40 et/ou du système 50 est défini non pas par une surface à courbure continue mais par une juxtaposition de facettes. Cette disposition permet un certain étalement du faisceau et évite la formation de points ou zones de trop forte concentration d'éclairage sur la face avant du tableau de bord.

Selon une autre caractéristique avantageuse de la présente invention, les moyens 50 peuvent être formés dans un guide 52 non pas plan mais conformé pour diriger le flux collecté en provenance du réflecteur 40 et de la source 30 vers un site d'utilisation, par exemple une aiguille.

Comme on l'a représenté schématiquement sur la figure 9, le second système optique 50 peut être muni de moyens 59 aptes à concentrer le flux qu'il reçoit du premier système optique 40, sur des caractères d'une plage d'indications portées par le cadran 54 (par exemple des symboles "10", "20", "30"... d'une plage de vitesse). Cette disposition permet de focaliser au mieux le flux récupéré sur les plages utiles à éclairer. Selon la figure 9, les moyens 59 sont constitués de formes convexes adaptées sur la face arrière 53 de la pièce 52, et travaillant par réfraction. Le contour de focalisation des moyens 59 sur la face avant 54 de la pièce 52 correspond au contour du caractère à éclairer. En variante les moyens 59 peuvent travailler par diffraction, par exemple grâce à des éléments de Fresnel, ou par réflexion, ou encore par combinaison des moyens précités.

Par ailleurs comme on l'a schématisé sur la figure 10, les prismes réflecteurs 56 prévus dans la pièce 52 pour renvoyer le flux vers un moyeu d'aiguille 14 ou encore vers des plages choisies d'un cadran 54, peuvent être formés non point d'une surface en tronc de cône continue autour de l'axe 16, mais d'une succession de segments de troncs de cône s'appuyant sur des rayons différents pour tenir compte de l'implantation des caractères dans le cadran 54 et éviter par exemple que la partie des prismes 56 destinée à renvoyer le flux lumineux vers le moyeu de l'aiguille ne soit située à l'aplomb d'un tel caractère. Plus précisément sur la figure 10 on a représenté un tel segment de tronc de cône pour le prisme 56, décalé radialement vers l'intérieur, en regard du caractère "220" d'une échelle de vitesse, par rapport au reste du prisme 56.

Selon une autre caractéristique avantageuse de la présente invention, le carter de l'élément optiquement opaque 10, soit de préférence la surface 44, définit par rapport à la source lumineuse 30, un angle solide complémentaire du premier système optique 40. Ainsi, le carter de l'élément optiquement opaque 10 occulte tout rayonnement direct de la source 30 à la surface 50 (constituée par exemple d'un cadran indicateur). Cette disposition évite que certaines zones de cette surface 50 n'apparaissent plus fortement éclairées que d'autres, lorsque le dispositif est observé non pas dans l'axe 16 mais latéralement.

Par ailleurs, la surface 44 peut être réalisée par tout matériau approprié, tel que matière plastique revêtue, ou métal, notamment pour former barrière thermique.

## Revendications

1.  Dispositif d'éclairage d'indicateur associé à un organe optiquement opaque (10), notamment d'un indicateur à aiguille (14) associé à un moyen optiquement opaque d'entraînement de l'aiguille, comportant:

    -   au moins une source lumineuse (30),
    -   un premier système optique (40) qui est adapté pour renvoyer vers l'avant et autour dudit moyen optiquement opaque (10), le flux lumineux qu'il reçoit de la source lumineuse (30) et
    -   un second système optique (50) adapté pour récupérer le flux lumineux renvoyé par le premier système optique (40) au moins au niveau d'un secteur de couronne entourant le moyen optiquement opaque (10),
        caractérisé par le fait que la source lumineuse (30) est disposée sur l'arrière dudit moyen optiquement opaque.

2.  Dispositif selon la revendication 1, caractérisé par le fait que le moyen optiquement opaque (10) est formé d'un moyen (12) d'entraînement à rotation d'une aiguille indicatrice.

3.  Dispositif selon l'une des revendications 1 ou 2, caractérisé par le fait qu'il est adapté pour éclairer des plages indicatrices formées sur un cadran transversal à l'axe optique (16) du dispositif.

4.  Dispositif selon l'une des revendications 1 à 3, caractérisé par le fait qu'il est adapté pour éclairer le moyeu d'une aiguille indicatrice (14).

5.  Dispositif selon l'une des revendications 1 à 4, caractérisé par le fait que le premier système optique (40) comprend un réflecteur (42) qui entoure au moins partiellement la source lumineuse (30).

6.  Dispositif selon la revendication 5, caractérisé par le fait que le réflecteur (40) est formé d'une surface de révolution délimitée par une génératrice de type conique.

7.  Dispositif selon l'une des revendications 5 ou 6, caractérisé par le fait que le réflecteur (40) est formé d'une surface de révolution délimitée par une génératrice en ellipse de révolution autour d'un axe incliné par rapport au grand axe de l'ellipse.

8.  Dispositif selon l'une des revendications 5 ou 6, caractérisé par le fait que le réflecteur (40) est formé d'une surface de révolution délimitée par une génératrice de type parabole.

9.  Dispositif selon la revendication 5, caractérisé par le fait que le réflecteur (40) est formé d'une surface de révolution délimitée par une génératrice de type conique approchée, adaptée pour définir un flux au moins sensiblement constant au niveau d'une couronne entourant ledit moyen optiquement opaque (10).

10. Dispositif selon la revendication 5, caractérisé par le fait que le réflecteur (40) formant le premier système optique est formé d'une succession de calottes (400) réparties autour de l'axe optique (16).

11. Dispositif selon la revendication 10, caractérisé par le fait que chaque calotte (400) est définie par une génératrice du type conique, par exemple ellipse ou parabole, voire conique dégénérée adaptée pour définir un flux constant, partiellement de révolution autour d'un axe respectif (402) incliné par rapport à l'axe optique (16) du système.

12. Dispositif selon l'une des revendications 10 ou 11, caractérisé par le fait que les axes respectifs (402) des calottes (400) s'appuyent sur un cône de révolution autour de l'axe (16) central ou sur une courbe qui n'est pas de révolution autour de cet axe (16).

13. Dispositif selon l'une des revendications 10 à 12 caractérisé par le fait que chaque axe (402) d'une calotte (400) est centré globalement sur un caractère d'une plage d'indications portées par un cadran (54).

14. Dispositif selon la revendication 5 , caractérisé par le fait que le réflecteur (40) est formé d'une surface de révolution délimitée par une génératrice de type conique dont un foyer coïncide au moins sensiblement avec la source lumineuse (20).

15. Dispositif selon l'une des revendications 5 à 12, caractérisé par le fait que l'axe de révolution de la génératrice qui délimite le réflecteur (40) est incliné par rapport à l'axe principal de cette génératrice.

16. Dispositif selon l'une des revendications 5 à 15, caractérisé par le fait que le réflecteur (40) comprend une calotte principale (42) à concavité dirigée vers l'avant du dispositif.

17. Dispositif selon l'une des revendications 5 à 16, caractérisé par le fait que le réflecteur (40) comprend une calotte secondaire (44) à concavité dirigée vers l'arrière, soit vers la source lumineuse (20).

18. Dispositif selon l'une des revendications 1 à 17, caractérisé par le fait que le moyen optiquement opaque (10) est muni d'un cône réflecteur (44) sur sa surface arrière.

19. Dispositif selon la revendication 18, caractérisé par le fait que le cône réflecteur (44) est défini par une génératrice rectiligne ou de type conique.

20. Dispositif selon l'une des revendications 1 à 19, caractérisé par le fait que le premier système optique (40) comprend des moyens (410) adaptés pour récupérer le flux lumineux émis par la source (30) vers la surface arrière de l'organe opaque (10) et diriger ce flux vers le second système optique (50), avec une incidence quasi parallèle à l'axe optique (16), de préférence pour éclairer un moyeu d'aiguille (14).

21. Dispositif selon la revendication 20, caractérisé par le fait que les moyens de récupération (410) sont formés dans une pièce (411) en matériau optiquement transparent, par exemple en verre ou en matière plastique.

22. Dispositif selon la revendication 20, caractérisé par le fait que les moyens de récupération (410) sont formés d'éléments réflecteurs (412, 414).

23. Dispositif selon l'une des revendications 20 à 22, caractérisé par le fait que les moyens de récupération (410) sont de révolution autour de l'axe optique (16).

24. Dispositif selon l'une des revendications 20 à 23, caractérisé par le fait que les moyens de récupération (410) travaillent par réfraction ou par réflexion lorsque l'incidence dépasse l'angle de réfraction limite.

25. Dispositif selon l'une des revendications 20 à 24, caractérisé par le fait que les moyens de récupération (410) définissent une première surface réflectrice (412) disposée en regard de la surface arrière de l'organe opaque (10) pour récupérer le flux émis dans cette direction par la source (30) et une seconde surface réflectrice (414) qui entoure la première surface (412) et qui est adaptée pour diriger le flux qu'elle reçoit de la surface (412, vers l'avant, soit vers le second système optique (50), avec une incidence parallèle à l'axe optique (16).

26. Dispositif selon l'une des revendications 20 à 25, caractérisé par le fait que les moyens de récupération (410) comprennent :

- une première surface réflectrice (412) disposée en regard de la surface arrière de l'organe opaque (10) pour récupérer le flux émis dans cette direction par la source (30), ladite première surface (412) étant une surface de révolution délimitée par une génératrice en portion d'ellipse dont un premier foyer coïncide avec le centre de la source lumineuse 30 et qui définit un second foyer annulaire,

- une surface d'entrée (413) dirigée vers la source (30) et délimitée de préférence par une calotte sphérique concave centrée sur la source (30), de sorte que cette surface (413) ne dévie pas les rayons qui la traversent, la surface d'entrée (413) possèdant la même ouverture angulaire, vue de la source (30), que ladite première surface réflectrice (412),

- une seconde surface réflectrice (414) qui entoure la première surface réflectrice (412) et qui est adaptée pour diriger le flux qu'elle reçoit de cette surface (412), vers l'avant, soit vers le second système optique (50), avec une incidence parallèle à l'axe optique (16), la seconde surface réflectrice (414) étant formée d'une surface de révolution autour de l'axe optique (16), délimitée par une génératrice en portion de parabole dont le foyer coïncide avec le second foyer annulaire de la première surface réflectrice (412) et dont le grand axe s'étend parallèlement à l'axe optique (16).

27. Dispositif selon l'une des revendications 20 à 26, caractérisé par le fait que les moyens de récupération (410) comprennent une surface d'entrée (415) adaptée pour focaliser les rayons qui la traversent en provenance de la source (30) sur un foyer d'une surface périphérique de révolution, avantageusement parabolique (414).

28. Dispositif selon la revendication 25, caractérisé par le fait que la première surface réflectrice (412) est une surface de révolution délimitée par une portion d'ellipse dont un premier foyer coïncide au moins sensiblement avec la source (30) et qui délimite un second foyer annulaire centré autour de l'axe (16) et la seconde surface réflectrice (414) est une surface de révolution délimitée par une portion de parabole dont le foyer coïncide avec le second foyer de la première surface (412) et dont le grand axe s'étend parallèlement à l'axe optique (16).

29. Dispositif selon l'une des revendications 1 à 28, caractérisé par le fait que le second système optique (50) est formé dans un conduit de lumière (52).

30. Dispositif selon l'une des revendications 1 à 29, caractérisé par le fait que le second système optique (50) comprend un cadran (54) rapporté ou imprimé sur un conduit optique (52).

31. Dispositif selon l'une des revendications 1 à 30, caractérisé par le fait que le second système optique (50) comprend des prismes de renvoi (56) réalisés dans un conduit optique (52), par exemple un double prisme de renvoi (56) conique et concentrique à l'axe du système.

32. Dispositif selon l'une des revendications 1 à 31, caractérisé par le fait que le second système optique (50) comprend un réflecteur (58) de révolution autour de l'axe optique (16) du dispositif et délimité par une génératrice de type ellipse dont un foyer coïncide avec une zone de concentration du flux issu du premier système optique (40).

33. Dispositif selon l'une des revendications 1 à 32, caractérisé par le fait que le second système optique (50) comprend un conduit optique (52) pourvu d'un moyen diffuseur, tel qu'un revêtement de peinture blanche, sur sa face arrière (53).

34. Dispositif selon l'une des revendications 1 à 33, caractérisé par le fait qu'il est prévu un écran thermique entre la source lumineuse (30) et des cadrans ou impressions.

35. Dispositif selon la revendication 34, caractérisé par le fait que l'écran thermique est formé d'une peinture sélective réfléchissant les infra-rouges mais transparente aux rayonnements visibles.

36. Dispositif selon l'une des revendications 1 à 35, caractérisé par le fait que l'un au moins des premier et second systèmes optiques (40, 50) est formé en un matériau dichroïque adapté pour réfléchir le rayonnement visible et être transparent au rayonnement infra-rouges.

37. Dispositif selon l'une des revendications 1 à 36, caractérisé par le fait que l'un au moins du premier et du second système optique (40, 50) comprend un réflecteur (40) formé par une succession de facettes.

38. Dispositif selon l'une des revendications 1 à 37, caractérisé par le fait que le second système optique (50) est formé dans un guide conformé pour diriger le flux collecté en provenance du premier système optique (40) et de la source

(30) vers un site d'utilisation, par exemple une aiguille.

**39.** Dispositif selon l'une des revendications 1 à 38, caractérisé par le fait qu'il est utilisé pour définir un fond coloré au tableau de bord.

**40.** Dispositif selon l'une des revendications 1 à 39, caractérisé par le fait que le second système optique (50) est muni de moyens (59) aptes à concentrer le flux qu'il reçoit du premier système optique (40), sur des caractéres d'une plage d'indications portées par un cadran (54).

**41.** Dispositif selon la revendication 40, caractérisé par le fait que les moyens de concentration (59) travaillent par réflexion, réfraction ou diffraction, ou encore par combinaison de ces effets.

**42.** Dispositif selon l'une des revendications 40 ou 41, caractérisé par le fait que les moyens de concentration (59) comprennent des formes convexes adaptées sur la face arrière (53) d'une pièce (52) du second système optique (50), et travaillant par réfraction.

**43.** Dispositif selon la revendication 42, caractérisé par le fait que le contour de focalisation des moyens de concentration (59) sur la face avant (54) de la pièce (52) correspond au contour du caractère à éclairer.

**44.** Dispositif selon l'une des revendications 1 à 43, caractérisé par le fait que le second système optique (50) comprend des prismes réflecteurs (56) prévus dans une pièce (52) pour renvoyer le flux vers un moyeu d'aiguille (14) ou encore vers des plages choisies d'un cadran (54), lesquels prismes (56) sont formés d'une succession de segments de troncs de cône s'appuyant sur des rayons différents pour tenir compte de la disposition des caractères sur le cadran (54).

**45.** Dispositif selon l'une des revendications 1 à 44, caractérisé par le fait que le carter (44) de l'élément optiquement opaque (10) définit, par rapport à la source lumineuse (30), un angle solide complémentaire du premier système optique (40).

**46.** Tableau de bord pour véhicule automobile caractérisé par le fait qu'il incorpore au moins un dispositif d'éclairage conforme à l'une des revendications 1 à 45.

**Claims**

**1.** Indicator lighting device associated with an optically opaque member (10), especially for a needle indicator (14) associated with an optically opaque means of driving the needle comprising:

- at least one light source (30),
- a first optical system (40) which is adapted so as to return forwards and around the said optically opaque means (10), the luminous flux which it receives from the light source (30) and
- a second optical system (50) adapted to recover the luminous flux returned by the first optical system (40) at least at the level of a ring sector surrounding the optically opaque means (10), characterized in that the light source (30) is arranged on the rear of the said optically opaque means.

**2.** Device according to Claim 1, characterized in that the optically opaque means (10) is formed of a means (12) for rotating an indicator needle.

**3.** Device according to one of Claims 1 or 2, characterized in that it is adapted for lighting indicator ranges formed on a dial transverse to the optical axis (16) of the device.

**4.** Device according to one of Claims 1 to 3, characterized in that it is adapted for lighting the hub of an indicator needle (14).

**5.** Device according to one of Claims 1 to 4, characterized in that the first optical system (40) comprises a reflector (42) which at least partially surrounds the light source (30).

**6.** Device according to Claim 5, characterized in that the reflector (40) is formed of a surface of revolution delimited by a conical type generatrix.

7. Device according to one of Claims 5 or 6, characterized in that the reflector (40) is formed of a surface of revolution delimited by a generatrix of an ellipse of revolution about an axis inclined with respect to the major axis of the ellipse.

8. Device according to one of Claims 5 or 6, characterized in that the reflector (40) is formed of a surface of revolution delimited by a parabola type generatrix.

9. Device according to Claim 5, characterized in that the reflector (40) is formed of a surface of revolution delimited by an approximately conical type generatrix, adapted so as to define an at least substantially constant flux at the level of a ring surrounding the said optically opaque means (10).

10. Device according to Claim 5, characterized in that the reflector (40) forming the first optical system is formed of a succession of cups (400) distributed around the optical axis (16).

11. Device according to Claim 10, characterized in that each cup (400) is defined by a generatrix of the conical type, for example ellipse or parabola, or even a degenerate conic adapted so as to define a constant flux, partially of revolution about a respective axis (402) inclined with respect to the optical axis (16) of the system.

12. Device according to one of Claims 10 or 11, characterized in that the respective axes (402) of the cups (400) stand on a cone of revolution about the central axis (16) or on a curve which is not one of revolution about this axis (16).

13. Device according to one of Claims 10 to 12, characterized in that each axis (402) of a cup (400) is centred globally on a character of a range of indications carried by a dial (54).

14. Device according to Claim 5, characterized in that the reflector (40) is formed of a surface of revolution delimited by a conical type generatrix, a focus of which coincides at least substantially with the light source (20).

15. Device according to one of Claims 5 to 12, characterized in that the axis of revolution of the generatrix which delimits the reflector (40) is inclined with respect to the main axis of this generatrix.

16. Device according to one of Claims 5 to 15, characterized in that the reflector (40) comprises a main cup (42) with concavity directed forwards of the device.

17. Device according to one of Claims 5 to 16, characterized in that the reflector (40) comprises a secondary cup (44) with concavity directed rearwards, i.e. towards the light source (20).

18. Device according to one of Claims 1 to 17, characterized in that the optically opaque means (10) is furnished with a reflector cone (44) on its rear surface.

19. Device according to Claim 18, characterized in that the reflector cone (44) is defined by a rectilinear or conical type generatrix.

20. Device according to one of Claims 1 to 19, characterized in that the first optical system (40) comprises means (410) adapted for recovering the luminous flux emitted by the source (30) towards the rear surface of the optical member (10) and for directing this flux towards the second optical system (50), with incidence almost parallel to the optical axis (16), preferably so as to light a needle hub (14).

21. Device according to Claim 20, characterized in that the means of recovery (410) are formed in a component (411) of optically transparent material, for example glass or plastic.

22. Device according to Claim 20, characterized in that the means of recovery (410) are formed of reflector elements (412, 414).

23. Device according to one of Claims 20 to 22, characterized in that means of recovery (410) are of revolution about the optical axis (16).

24. Device according to one of Claims 20 to 23, characterized in that the means of recovery (410) work by refraction or by reflection when the incidence exceeds the limit angle of refraction.

**25.** Device according to one of Claims 20 to 24, characterized in that the means of recovery (410) define a first reflecting surface (412) arranged opposite the rear surface of the opaque member (10) so as to recover the flux emitted in this direction by the source (30) and a second reflecting surface (414) which surrounds the first surface (412) and which is adapted so as to direct the flux which it receives from the surface (412) forwards, i.e. towards the second optical system (50), with incidence parallel to the optical axis (16).

**26.** Device according to one of Claims 20 to 25, characterized in that the means of recovery (410) comprise:

- a first reflecting surface (412) arranged opposite the rear surface of the opaque member (10) so as to recover the flux emitted in this direction by the source (30), the said first surface (412) being a surface of revolution delimited by a generatrix of a portion of an ellipse, a first focus of which coincides with the centre of the light source 30 and which defines a second annular focus,
- an inlet surface (413) directed towards the source (30) and preferably delimited by a concave spherical cup centred on the source (30), so that this surface (413) does not deviate the rays which pass through it, the inlet surface (413) possessing the same angular aperture, seen from the source (30), as the said first reflecting surface (412),
- a second reflecting surface (414) which surrounds the first reflecting surface (412) and which is adapted so as to direct the flux which it receives from this surface (412), forwards, i.e. towards the second optical system (50), with incidence parallel to the optical axis (16), the second reflecting surface (414) being formed of a surface of revolution about the optical axis (16), delimited by a generatrix of a portion of parabola whose focus coincides with the second annular focus of the first reflecting surface (412) and whose major axis extends parallel to the optical axis (16).

**27.** Device according to one of Claims 20 to 26, characterized in that the means of recovery (410) comprise an inlet surface (415) adapted so as to focus the rays which pass through it originating from the source (30) onto a focus of a peripheral surface of revolution, advantageously parabolic (414).

**28.** Device according to Claim 25, characterized in that the first reflecting surface (412) is a surface of revolution delimited by a portion of ellipse, a first focus of which coincides at least substantially with the source (30) and which delimits a second annular focus centred about the axis (16) and the second reflecting surface (414) is a surface of revolution delimited by a portion of parabola whose focus coincides with the second focus of the first surface (412) and whose major axis extends parallel to the optical axis (16).

**29.** Device according to one of Claims 1 to 28, characterized in that the second optical system (50) is formed in a light duct (52).

**30.** Device according to one of Claims 1 to 29, characterized in that the second optical system (50) comprises a dial (54) attached or printed on an optical duct (52).

**31.** Device according to one of Claims 1 to 30, characterized in that the second optical system (50) comprises returning prisms (56) made in an optical duct (52), for example a double conical returning prism (56) concentric with the axis of the system.

**32.** Device according to one of Claims 1 to 31, characterized in that the second optical system (50) comprises a reflector (58) of revolution about the optical axis (16) of the device and delimited by an ellipse type generatrix, a focus of which coincides with a zone of concentration of the flux emanating from the first optical system (40).

**33.** Device according to one of Claims 1 to 32, characterized in that the second optical system (50) comprises an optical duct (52) provided with a diffuser means, such as a coat of white paint, on its rear face (53).

**34.** Device according to one of Claims 1 to 33, characterized in that a thermal screen is provided between the light source (30) and dials or prints.

**35.** Device according to Claim 34, characterized in that the thermal screen is formed of a selective paint which reflects infrared but is transparent to visible radiations.

**36.** Device according to one of Claims 1 to 35, characterized in that at least one of the first and second optical systems (40, 50) is formed from a dichroic material adapted so as to reflect the visible radiation and be transparent to the infrared radiation.

37. Device according to one of Claims 1 to 36, characterized in that at least one of the first and of the second optical system (40, 50) comprises a reflector (40) formed by a succession of facets.

38. Device according to one of Claims 1 to 37, characterized in that the second optical system (50) is formed in a guide shaped so as to direct the collected flux originating from the first optical system (40) and from the source (30) towards a site of use, for example a needle.

39. Device according to one of Claims 1 to 38, characterized in that it is used to define a coloured background for the dashboard.

40. Device according to one of Claims 1 to 39, characterized in that the second optical system (50) is furnished with means (59) able to concentrate the flux which it receives from the first optical system (40) onto characters of a range of indications carried by a dial (54).

41. Device according to Claim 40, characterized in that the means of concentration (59) work by reflection, refraction or diffraction, or else by combining these effects.

42. Device according to one of Claims 40 or 41, characterized in that the means of concentration (59) comprise convex shapes adapted to the rear face (53) of a component (52) of the second optical system (50), and working by refraction.

43. Device according to Claim 42, characterized in that the contour of focusing of the means of concentration (59) on the front face (54) of the component (52) corresponds to the contour of the character to be lit.

44. Device according to one of Claims 1 to 43, characterized in that the second optical system (50) comprises reflector prisms (56) provided in a component (52) for returning the flux towards a needle hub (14) or else towards chosen ranges of a dial (54), which prisms (56) are formed of a succession of frustoconical segments standing on different radii so as to take account of the layout of the characters on the dial (54).

45. Device according to one of Claims 1 to 44, characterized in that the casing (44) of the optically opaque element (10) defines, with respect to the light source (30), a solid angle complementary to the first optical system (40).

46. Dashboard for motor vehicle, characterized in that it incorporates at least one lighting device in accordance with one of Claims 1 to 45.

**Patentansprüche**

1. Beleuchtungseinrichtung für ein Anzeigegerät, das mit einem optisch dichten Organ (10) verbunden ist, und insbesondere für ein mit einem Zeiger versehenes Anzeigegerät (14), welches an ein optisch dichtes Mittel für den Antrieb des Zeigers angeschlossen ist und folgendes aufweist

   - mindestens eine Lichtquelle (30),
   - ein erstes optisches System (40), welches in vorderer Richtung und um das genannte optisch dichte Organ (10) den Lichtstrahl zurückstrahlen kann, den es aus der Lichtquelle (30) empfängt,
   - ein weites optisches System (50), welches den von dem ersten optischen System (40) zurückgestrahlten Lichtstrahl mindestens an einem Abschnitt einer das optisch dichte Mittels (10) umrandenden Einfassung auffangen kann,
   **dadurch kekennzeichnet, daß**
   die Lichtquelle (30) auf der Rückseite des optisch dichten Mittels angeordnet ist.

2. Beleuchtungseinrichtung nach Anspruch 1,
   **dadurch gekennzeichnet, daß**
   das optisch dichte Organ (10) aus einem Mittel (12) für den drehenden Antrieb des Zeigers eines Anzeigegerätes besteht.

3. Beleuchtungseinrichtung nach einem der Ansprüche 1 oder 2,

**dadurch gekennzeichnet, daß**
sie geeignet ist, Anzeigefelder zu beleuchten, welche auf einer Skalenscheibe ausgebildet sind, die quer zu der optischen Achse (16) der Beleuchtungseinrichtung angeordnet ist.

4. Beleuchtungseinrichtung nach einem der Ansprüche 1 bis 3,
**dadurch gekennzeichnet, daß**
sie so ausgelegt ist, daß sie die Nabe eines Zeigers (14) beleuchten kann.

5. Beleuchtungseinrichtung nach einem der Ansprüche 1 bis 4,
**dadurch gekennzeichnet, daß**
das erste optische System (40) einen Reflektor (42) aufweist, welcher die Lichtquelle (30) mindestens teilweise umrandet.

6. Beleuchtungseinrichtung nach Anspruch 5,
**dadurch gekennzeichnet, daß**
der Reflektor (40) aus einer Rotationsfläche besteht, die von einer konischen Mantellinie eingegrenzt wird.

7. Beleuchtungseinrichtung nach einem der Ansprüche 5 oder 6,
**dadurch gekennzeichnet, daß**
der Reflektor (40) aus einer Rotationsfläche besteht, welche von einer ellipsenförmigen Mantellinie eingegrenzt wird, die sich um eine Achse dreht, welche gegenüber der großen Achse der Ellipse geneigt ist.

8. Beleuchtungseinrichtung nach einem der Ansprüche 5 oder 6,
**dadurch gekennzeichnet, daß**
der Reflektor (40) aus einer Rotationsfläche besteht, welche von einer parabolischen Mantelfläche eingegrenzt wird.

9. Beleuchtungseinrichtung nach Anspruch 5,
**dadurch gekennzeichnet, daß**
der Reflektor (40) aus einer Rotationsfläche besteht, welche von einer konisch angenäherten Mantellinie eingegrenzt wird, die geeignet ist, einen mindestens weitgehend konstanten Lichtstrahl an einer Einfassung zu definieren, welche das optisch dichte Organ (10) umrandet.

10. Beleuchtungseinrichtung nach Anspruch 5,
**dadurch gekennzeichnet, daß**
der Reflektor (40), welcher das erste optische System bildet, aus einer Reihe von Deckgläsern (400) besteht, die um die optische Achse (16) verteilt angeordnet sind.

11. Beleuchtungseinrichtung nach Anspruch 10,
**dadurch gekennzeichnet, daß**
jedes Abdeckglas (400) von einer konischen Mantellinie, wie zum Beispiel einer ellipsenförmigen oder parabolischen Mantellinie, oder sogar einer konisch entarteten Mantellinie definiert wird, um einen konstanten Lichtstrahl zu erzeugen, welcher teilweise rund um eine jeweilige Achse (402) angeordnet ist, die gegenüber der optischen Achse (16) des Systems geneigt ist.

12. Beleuchtungseinrichtung nach einem der Ansprüche 10 oder 11,
**dadurch gekennzeichnet, daß**
die jeweiligen Achsen (402) der Abdeckgläser (400) an einem sich um die zentrale Achse (16) drehenden Konus oder an einer Kurve anliegen, die nicht um diese Achse (16) drehend angeordnet ist.

13. Beleuchtungseinrichtung nach einem der Ansprüche 10 bis 12,
**dadurch gekennzeichnet, daß**
die Achse (402) eines Deckglases (400) insgesamt auf ein Zeichen eines Anzeigefeldes zentriert ist, das in einer Skalenscheibe (54) enthalten ist

14. Beleuchtungseinrichtung nach Anspruch 5,
**dadurch gekennzeichnet, daß**
der Reflektor (40) aus einer Rotationsfläche besteht, welche von einer konischen Mantellinie eingegrenzt wird, bei der ein Brennpunkt mindestens weitgehend mit der Lichtquelle (20) zusammenfällt.

15. Beleuchtungseinrichtung nach einem der Ansprüche 5 bis 12,
**dadurch gekennzeichnet, daß**
die Rotationsachse der Mantellinie, welche den Reflektor (40) eingrenzt, gegenüber der Hauptachse dieser Mantellinie geneigt ist.

16. Beleuchtungseinrichtung nach einem der Ansprüche 5 bis 15,
**dadurch gekennzeichnet, daß**
der Reflektor (40) ein mit einem Hohlraum versehenes Hauptabdeckglas (42) aufweist, das gegen die Vorderseite der Beleuchtungseinrichtung gerichtet ist.

17. Beleuchtungseinrichtung nach einem der Ansprüche 5 bis 16,
**dadurch gekennzeichnet, daß**
der Reflektor (40) ein mit einem Hohlraum versehenes sekundäres Abdeckglas (44) aufweist, das gegen die Rückseite und damit gegen die Lichtquelle (20) gerichtet ist.

18. Beleuchtungseinrichtung nach einem der Ansprüche 1 bis 17,
**dadurch gekennzeichnet, daß**
das optisch dichte Organ (10) an seiner Rückseite mit einem Reflektorkonus (44) ausgerüstet ist.

19. Beleuchtungseinrichtung nach Anspruch 18,
**dadurch gekennzeichnet, daß**
der Reflektorkonus (44) durch eine gerade oder konische Mantellinie definiert wird.

20. Beleuchtungseinrichtung nach einem der Ansprüche 1 bis 19,
**dadurch gekennzeichnet, daß**
das erste optische System (40) Mittel (410) aufweist, die geeignet sind, den von der Lichtquelle (30) an die Rückseite des optisch dichten Organs (10) abgegebenen Lichtstrahl aufzufangen und diesen Lichtstrahl an das zweite optische System (50) mit einem Einfallswinkel zu leiten, welcher praktisch parallel zu der optischen Achse (16) verläuft, Um vorzugsweise die Nabe (14) eines Zeigers zu beleuchten.

21. Beleuchtungseinrichtung nach Anspruch 20,
**dadurch gekennzeichnet, daß**
die Rückspeisungsmittel (410) aus einem Teil (411) aus einem optisch transparenten Material bestehen, wie zum Beispiel Glas oder Kunststoff.

22. Beleuchtungseinrichtung nach Anspruch 20,
**dadurch gekennzeichnet, daß**
die Rückspeisungsmittel (410) aus reflektierenden Elementen (412, 414) bestehen.

23. Beleuchtungseinrichtung nach einem der Ansprüche 20 bis 22,
**dadurch gekennzeichnet, daß**
die Rückspeisungsmittel (410) rund um die optische Achse (16) angeordnet sind.

24. Beleuchtungseinrichtung nach einem der Ansprüche 20 bis 23,
**dadurch gekennzeichnet, daß**
die Rückspeisungsmittel (410) durch Refraktion oder Reflexion arbeiten, weg der Einfallswinkel den Grenzwinkel der Refraktion überschreitet.

25. Beleuchtungseinrichtung nach einem der Ansprüche 20 bis 24,
**dadurch gekennzeichnet, daß**
die Rückspeisungsmittel (410) eine erste reflektierende Fläche (412) bilden, welche gegenüber der Rückseite des optisch dichten Organs (10) angeordnet ist, um den Lichtstrahl aufzufangen, welcher von der Lichtquelle (30) in diese Richtung ausgestrahlt wird, sowie eine zweite reflektierende Fläche (414), welche die erste reflektierende Fläche (412) umrandet und so ausgelegt ist, daß sie den von der Fläche (412) erhaltenen Lichtstrahl in vorderer Richtung, das heißt, gegen das zweite optische System (50) mit einem Einfallswinkel leiten kann, der parallel zu der optischen Achse (16) verläuft.

26. Beleuchtungseinrichtung nach einem der Ansprüche 20 bis 25,
**dadurch gekennzeichnet, daß**
die Rückspeisungsmittel (410) folgendes enthalten:

- eine erste reflektierende Fläche (412), welche gegenüber der Rückseite des optisch dichten Organs (10) angeordnet ist, um den Lichtstrahl aufzufangen, welcher von der Lichtquelle (30) in dieser Richtung ausgestrahlt wird, wobei diese erste Fläche (412) eine runde Fläche ist, welche von einer ellipsenförmigen Mantellinie eingegrenzt wird, bei der ein erster Brennpunkt mit dem Zentrum der Lichtquelle (30) zusammenfällt und einen zweiten ringförmigen Brennpunkt bildet,
- eine Eingangsfläche (413), welche gegen die Lichtquelle (30) gerichtet ist und vorzugsweise aus einem konkaven kugelförmigen Abdeckglas besteht, das so auf die Lichtquelle (30) zentriert ist, daß diese Eingangsfläche (413) die sie durchquerenden Strahlen nicht ableitet, wobei die Eingangsfläche (413) ausgehend von der Lichtquelle (30) die gleiche Winkelöffnung aufweist, wie die erste reflektierende Fläche (412),
- eine zweite reflektierende Fläche (414), welche die erste reflektierende Fläche (412) umrandet und so ausgelegt ist, daß sie den von der Lichtquelle (30) empfangenen Lichtstrahl nach vorne richten kann, also gegen das zweite optische System (50) und zwar mit einem Einfallswinkel, der parallel zu der optischen Achse (16) verläuft, wobei die zweite reflektierende Fläche (414) aus einer rund um die optische Achse (16) verlaufenden Fläche besteht, welche von einer parabolischen Mantellinie begrenzt wird, deren Brennpunkt mit dem zweiten ringförmigen Brennpunkt der ersten reflektierenden Fläche (412) zusammenfällt und deren große Achse parallel zu der optischen Achse (16) verläuft.

27. Beleuchtungseinrichtung nach einem der Ansprüche 20 bis 26,
**dadurch gekennzeichnet, daß**
die Rückspeisungsmittel (410) eine Eingangsfläche (415) aufweisen, die so gestaltet ist, daß sie die sie durchquerenden aus der Lichtquelle (30) abgegebenen Strahlen auf dem Brennpunkt einer peripheren runden Fläche (414) bündeln kann, die vorzugsweise ein parabolische Form hat.

28. Beleuchtungseinrichtung nach Anspruch 25,
**dadurch gekennzeichnet, daß**
die erste reflektierende Fläche (412) eine runde Fläche ist, welche von einem ellipsenförmigen Teil eingegrenzt wird, bei dem ein erster Brennpunkt mindestens weitgehend mit der Lichtquelle (30) zusammenfällt und die einen zweiten ringförmigen Brennpunkt eingrenzt, welcher auf die optische Achse (16) zentriert ist, und daß die zweite reflektierende Fläche (414) eine runde Fläche ist, welche von einem parabolischen Teil eingegrenzt wird, dessen Brennpunkt mit dem zweiten Brennpunkt der ersten Fläche (412) zusammenfällt und deren große Achse parallel zu der optischen Achse (16) verläuft.

29. Beleuchtungseinrichtung nach einem der Ansprüche 1 bis 28,
**dadurch gekennzeichnet, daß**
das zweite optische System (50) in einer Lichtröhre (52) ausgebildet ist`

30. Beleuchtungseinrichtung nach einem der Ansprüche 1 bis 29,
**dadurch gekennzeichnet, daß**
das zweite optische System (50) eine Skalenscheibe (54) aufweist, die entweder an eine optische Lichtröhre (52) angesetzt oder auf sie aufgedruckt ist.

31. Beleuchtungseinrichtung nach einem der Ansprüche 1 bis 30,
**dadurch gekennzeichnet, daß**
das zweite optische System (50) Spiegelprismen (56) aufweist, welche in einer optischen Lichtröhre (52) angeordnet sind, wie zum Beispiel ein doppeltes konisches Spiegelprisma (56), das konzentrisch zur Achse des Systems angeordnet ist

32. Beleuchtungseinrichtung nach einem der Ansprüche 1 bis 31,
**dadurch gekennzeichnet, daß**
das zweite optische System (50) einen rund uni die optische Achse (16) der Beleuchtungseinrichtung angeordneten Reflektor (58) aufweist, welcher von einer ellipsenförmigen Mantellinie eingegrenzt wird, deren Brennpunkt mit einem Konzentrationsbereich des Lichtstrahls zusammenfällt, welcher von den, ersten optischen System (40) abgestrahlt wird.

33. Beleuchtungseinrichtung nach einem der Ansprüche 1 bis 32,
**dadurch gekennzeichnet, daß**
das zweite optische System (50) eine optische Lichtröhre (52) mit einem Diffuser aufweist, wie zum Beispiel einem weißen Anstrich auf seiner Rückseite (53).

34. Beleuchtungseinrichtung nach einem der Ansprüche 1 bis 33,
**dadurch gekennzeichnet, daß**
zwischen der Lichtquelle (30) und der Skalenscheibe oder den Aufdrucken ein Hitzeschild vorgesehen ist.

35. Beleuchtungseinrichtung nach Anspruch 34,
**dadurch gekennzeichnet, daß**
der Hitzeschild aus einem selektiven Anstrich besteht, welcher Infrarotstrahlen reflektiert, jedoch für sichtbare Strahlen transparent ist.

36. Beleuchtungseinrichtung nach einem der Ansprüche 1 bis 35,
**dadurch gekennzeichnet, daß**
mindestens eines der ersten und zweiten optischen Systeme (40, 50) aus einem dichroitischen Material besteht, welches die sichtbaren Strahlen reflektieren kann und für Infrarotstrahlen transparent ist.

37. Beleuchtungseinrichtung nach einem der Ansprüche 1 bis 36,
**dadurch gekennzeichnet, daß**
mindestens eines der ersten und zweiten optischen Systeme (40, 50) einen Reflektor (40) aufweist, der aus einer Reihe von Facetten besteht.

38. Beleuchtungseinrichtung nach einem der Ansprüche 1 bis 37,
**dadurch gekennzeichnet, daß**
das zweite optische System (50) in einer Führung angeordnet ist, die so ausgelegt ist, daß sie den aus dem ersten optischen System (40) und der Lichtquelle (30) aufgefangenen Lichtstrahl (30) an einen Verwendungsort leiten kann, wie zum Beispiel einen Zeiger.

39. Beleuchtungseinrichtung nach einem der Ansprüche 1 bis 38,
**dadurch gekennzeichnet, daß**
sie eingesetzt wird, um einen farbigen Hintergrund eines Armaturenbretts herzustellen.

40. Beleuchtungseinrichtung nach einem der Ansprüche 1 bis 39,
**dadurch gekennzeichnet, daß**
das zweite optische System (50) mit Mitteln (59) ausgestattet ist, die geeignet sind, den aus dem ersten optischen System (40) empfangenen Lichtstrahl auf den Zeichen eines Anzeigefeldes einer Skalenscheibe (54) zu konzentrieren.

41. Beleuchtungseinrichtung nach Anspruch 40,
**dadurch gekennzeichnet, daß**
die Mittel für die Konzentration (59) durch Reflexion, Refraktion oder Diffraktion oder in Kombination mit diesen Wirkungen arbeiten.

42. Beleuchtungseinrichtung nach einem der Ansprüche 40 oder 41,
**dadurch gekennzeichnet, daß**
die Mittel für die Konzentration (59) konvexe Profilen auf der Rückseite (53) eines Teils (52) des zweiten optischen Systems (50) aufweisen, welche durch Refraktion arbeiten.

43. Beleuchtungseinrichtung nach Anspruch 42,
**dadurch gekennzeichnet, daß**
das Bündelungsprofil der Mittel für die Konzentration (59) auf der Vorderseite (54) des Teils (52) dem Profil des zu beleuchtenden Zeichens entspricht.

44. Beleuchtungseinrichtung nach einem der Ansprüche 1 bis 43,
**dadurch gekennzeichnet, daß**
das zweite optische System (50) Spiegelprismen (56) in einem Teil (52) enthält, um den Lichtstrahl an die Nahe eines Zeigers (14) oder auf bestimmte Felder einer Skalenscheibe (54) zu richten, wobei diese Spiegelprismen (56) aus einer Folge von stumpfkegeligen Abschnitten bestehen, welche sich an unterschiedlichen Radien abstützen, um dadurch die Anordnung der Zeichen auf der Skalenscheibe (54) zu berücksichtigen.

45. Beleuchtungseinrichtung nach einem der Ansprüche 1 bis 44,
**dadurch gekennzeichnet, daß**
das Gehäuse (44) des optisch dichten Elementes (10) gegenüber der Lichtquelle (30) in einem festen Winkel angeordnet ist, welcher komplementär zu dem ersten optischen System (40) ausgelegt ist

46. Armaturenbrett für ein Kraftfahrzeug,
**dadurch gekennzeichnet, daß**
es mindestens eine Beleuchtungseinrichtung nach einem der Ansprüche 1 bis 45 aufweist.

FIG.1

FIG.5

FIG. 2

FIG. 3

# FIG.4

FIG.6

FIG.7

FIG.8

FIG.9

FIG.10